# EUROPEAN PATENT APPLICATION

(11) **EP 1 505 596 A2**
(43) Date of publication of application: **09.02.2005**
(21) Application number: 04254509.5
(22) Date of filing: 28.07.2004
(51) Int. Cl.: G11B 20/00

(54) **Information recording medium manufacturing control system, information processing apparatus and method, and computer program thereof**

(30) Priority: 30.07.2003 JP 2003282336
(71) Applicant: SONY CORPORATION, Tokyo (JP)
(72) Inventor: Asano, Tomoyuki c/o Sony Corporation, Tokyo (JP); Muramatsu, Katsumi c/o Sony Corporation, Tokyo (JP); Kitani, Satoshi c/o Sony Corporation, Tokyo (JP); Takashima, Yoshikazu c/o Sony Corporation, Tokyo (JP); Yonemitsu, Jun c/o Sony Corporation, Tokyo (JP)
(74) Representative: Smith, Samuel Leonard

(57) **Abstract**

A system, apparatus and method for prevention of unauthorized manufacture and distribution of information recording media containing content, in which an information recording medium manufacturing entity (103) transmits a key information issue request (152) to a key information issue entity (104). The key information issue request (152) is created based on an information recording medium manufacturing request (151) issued by a content rights owner (102). The key information issue entity (104) verifies authenticity of the key information issue request (152) and, depending on the legitimacy acknowledged as a result of such verification, issues a key information (153) for storing the content into the information recording medium (110). Manufacturing of discs or media containing improperly acquired content is prevented because the key information cannot be obtained for content acquired through unauthorized channels.

## Description

The present document is based on Japanese Priority Application JP2003-282336 filed in the Japanese Patent Office on July 30, 2003, the content in which being incorporated herein by reference to the extent permitted by law.

The present invention relates an information recording medium manufacturing control system, an information processing apparatus and method, and a computer program. Specifically, it relates to an information recording medium manufacturing control system which prevents manufacture, distribution of unauthorized copies of an information recording medium which has content recorded thereon, and use of unauthorized copy content; the invention also relates to corresponding information processing apparatus and method, and computer program.

Various software data (these are hereinafter referred to as content) such as audio data such as music, image data such as movies, game programs, and various types of application programs can be stored as digital data in recording media, for example DVDs (Digital Versatile Disc), MDs (Mini Disc), and CDs (Compact Disc). Also, in recent years, discs capable of high density recording by using blue laser, for example, have been developed, and digital content is stored in such various information recording media (recording media) and provided for users. A user performs reproduction and use of the content in a reproduction apparatus such as a PC (Personal Computer) owned and a disc player.

For many varieties of content such as music data and image data, their creators or sellers typically held the distribution rights and the like. Thus, in distribution of these content, it is common to employ a configuration with certain use limitations. In other words, the use of the content is permitted only for normal users to prevent unauthorized copies and the like.

According to recording/reproduction processing of digital data, recording and reproduction can be repeated without degrading images and audio, and the problem of distribution of so-called pirated discs has occurred in which content are copied on data recordable media such as CD-Rs.

Particularly, a recording medium of relatively large capacity such as a DVD or a recording medium using a blue laser recording method capable of higher capacity recording can record data of, for example, one or several movies on a single medium. As content can be easily recorded as digital information in this manner, the problem of the circulation of unauthorized copies often occurs to make the problem of preventing benefits of copyright holders and distribution rights holders serious. From such a current situation, it is an important issue how to prevent unauthorized copies to protect benefits of copyrights holders and distribution rights holders.

When each of information recording media such as CDs, DVDs, or blue laser recording media which store content is manufactured, a content owner having the rights of the content. In other words, the copyrights or the distribution rights for the content provides the content for a disc (information recording medium) manufacturing plant, and the disc manufacturing plant records the content received from the content owner on the disc and provides the manufactured disc for a user through a distributor such as a dealer's shop.

The content owner having the rights of the content and the disc manufacturer are typically present as separate entities. Control of the content performed in either the content owner or the disc manufacturer is insufficient, and it is necessary to perform appropriate control in both the entities.

At present, however, it is difficult to say that an appropriate configuration for comprehensively and efficiently performing content control and key information control is realized in a manufacturing route of information recording media which store content, and it is likely that a recording medium with unauthorized copy content is circulated in the market.

Particularly, in content delivery business such as movies using recording media such as DVDs, a situation occurs in which pirate manufacturers produce pirated discs in large amounts and distribute them to the market to actually cause the problem that the benefits which should have been given to content owners are reduced inappropriately. As one scenario in which such a situation occurs, stolen content such as unauthorized copy content is carried into a disc plant and it is used to make pirated discs.

It is difficult to discriminate between media distributed to the market as a result of a theft act of a content by a content editor who receives a request from a content owner or manufacturing of a stolen content by a disc manufacturer himself and a normal product, and distribution of unauthorized media to the market is causing a more serious condition.

Specifically, a situation in which a disc manufacturer himself produces unauthorized copy content in large amounts occurs. In view of such current situations, complete trust cannot be placed even in a disc manufacturer which is provided with a content from a content owner and produces a disc which stores the content, and it is necessary to form a system which performs control of such a disc manufacturing entity to eliminate manufacturing of a recording medium which stores an unauthorized content.

The present invention has been conceived in view of the aforementioned problems, and it is an object to provide an information recording medium manufacturing control system capable of eliminating manufacturing of an information recording medium which stores an improperly acquired content and preventing manufacturing, distribution, and use of a recording medium which stores an unauthorized content in a configuration which stores and provides a content on various information recording media such as DVDs, CDs, and blue laser recording media, an information processing apparatus and method, and a computer program.

The present invention is configured such that, when an information recording medium manufacturing entity such as a disc plant manufactures an information recording medium which store an encrypted content, it receives key information (EKB: Enabling Key Block) for acquiring a key applied to decryption of the encrypted content stored on the information recording medium from a key information (EKB) issue center, and as a condition for the information recording medium manufacturing entity to the key information (EKB) from the key information (EKB) issue center, the information recording medium manufacturing entity shows that it received an authorized information recording medium manufacturing request from a content rights owning entity. The information recording medium manufacturing control system, the information processing apparatus and method, and the computer program are provided in which, even if the information recording medium manufacturing entity such as a disc plant acquires an improperly acquired content which does not receive a disc manufacturing request from the content rights owning entity, the key information (EKB) cannot be received from the key information (EKB) issue center, and disc manufacturing for the improperly acquired content can be prevented.

A first aspect of the present invention includes an information recording medium manufacturing control system having: content rights owning entity having copyrights or distribution rights over a content; information recording medium manufacturing entity receiving an information recording medium manufacturing request from the content rights owning entity to perform manufacturing processing of an information recording medium storing encrypted content; and key information issue entity providing the information recording medium manufacturing entity with a key information block capable of acquiring key information for decryption of the encrypted content in response to a key information issue request from the information recording medium manufacturing entity; wherein the key information issue entity verifies whether the key information issue request from the information recording medium manufacturing entity includes authorized request data corresponding to an information recording medium manufacturing request from the content rights owning entity, and, on condition that the authorized request data is verified, provides the key information block for the information recording medium manufacturing entity; and the information recording medium manufacturing entity includes a configuration capable of manufacturing an information recording medium storing encrypted content made by encrypting a received content from the content rights owning entity and the key information block received from the key information issue entity.

In addition, the key information block may include a key information block storing key information acquirable only with decryption processing based on a key stored in a user device having authorized content use rights, and the key information acquirable from the key information block includes key information required in decryption processing of the encrypted content stored on the information recording medium.

Preferably, the key information block includes an EKB (Enabling Key Block) capable of acquiring key information only with decryption processing which applies a stored key of a user device selected from a plurality of user devices set as leaves in a tree configuration.

Also preferably, the key information issue entity performs verification of whether or not the key information issue request includes authorized requested data corresponding to an information recording medium manufacturing request based on signature verification processing of the content rights owning entity included in a key information issue request from the information recording medium manufacturing entity.

It is also preferable that the information recording medium manufacturing control system according to a preferred embodiment of the present invention further includes a configuration in which, in data transmission and reception performed among the content rights owning entity, the information recording medium manufacturing entity and the key information issue entity, mutual authorization processing is performed, data communication is performed on condition that the authorization is satisfied, and encryption processing is performed for transmission data.

It is also preferable that the information recording medium manufacturing control system according to a preferred embodiment of the present invention further includes a configuration in which information transmission processing between the content rights owning entity and the information recording medium manufacturing entity is performed as processing through a recording medium.

In addition, the content rights owning entity, the information recording medium manufacturing entity, and the key information issue entity have a public key, corresponding to a public key certificate issued at a certificate authority, and a secret key; and communication between the entities is performed by mutual authorization under a public key encryption method.

It is also preferable that the information recording medium manufacturing control system according to a preferred embodiment of the present invention further has the information recording medium manufacturing request and the key information issue request including identification information of the content rights owning entity and the information recording medium manufacturing entity.

It is also preferable that the information recording medium manufacturing control system according to a preferred embodiment of the present invention further includes the key information issue request having a public key certificate of the content rights owning entity; and the key information issue entity verifies a revoke status as an invalidation status of the public key certificate of the content rights owning entity, and, on condition that it is verified that it is not revoked, performs processing of providing the key information block for the information recording medium manufacturing entity.

It is also preferable that the information recording medium manufacturing control system according to a preferred embodiment of the present invention wherein the key information issue request includes content to be stored on an information recording medium or a hash value corresponding to the content.

Also, it is preferable that the information recording medium manufacturing entity performs information recording medium manufacturing processing which applies an information recording medium manufacturing apparatus performing manufactured number recording processing.

In addition, the information recording medium manufacturing entity has a data writing machine licensed from a control entity of the information recording medium manufacturing control system; and, on condition that writing permission information is received from the control entity, performs data writing processing on the information recording medium using the data writing machine.

Another preferred embodiment of the present invention provides an information processing apparatus for performing processing of creating information recording medium manufacturing request data provided with digital signature related to data including: content; identification data for each of a content rights owning entity and an information recording media manufacturing entity; and information recording medium manufactured number data.

Still another preferred embodiment of the present invention provides an information processing apparatus including a creating mechanism for creating key information issue request data corresponding to information recording medium manufacturing request data received from a content rights owning entity, wherein the key information issue request data includes: at least content or a hash value based on the content; identification data for each of the content rights owning entity and an information recording medium manufacturing entity; information recording medium manufactured number data; and digital signature of the content rights owning entity of each of the data.

Another preferred embodiment of the present invention provides an information processing apparatus for providing an information recording medium manufacturing entity with a key information block capable of acquiring key information applied to decryption of an encrypted content stored on an information recording medium in response to a key information issue request from the information recording medium manufacturing entity, the apparatus including: verification mechanism of processing a signature of a content rights owning entity included in the key information issue request; and transmission mechanism of transmitting the key information block to the information recording medium manufacturing entity based on verification of signature by the verification mechanism, on condition that it is verified that the key information issue request is an authorized key information issue request data corresponding to an information recording medium manufacturing request issued by the content rights owning entity.

Also, there is provided an information recording medium manufacturing control method according to another preferred embodiment of the present invention including the steps of: transmitting an information recording medium manufacturing request from a content rights owning entity having copyrights or distribution rights over a content to an information recording medium manufacturing entity performing processing of manufacturing an information recording medium storing encrypted content; transmitting a key information issue request from the information recording medium manufacturing entity to a key information issue entity; verifying with the key information issue entity whether or not the key information issue request is authorized request data corresponding to an information recording medium manufacturing request from the content rights owning entity; providing a key information block capable of acquiring key information applied to decryption of the encrypted content from the key information issue entity to the information recording medium manufacturing entity on condition that it is verified that the key information issue request is authorized request data corresponding to the information recording medium manufacturing request as a result of the verification processing in the verification step; and manufacturing an information recording medium storing an encrypted content by encrypting a content received from the content rights owning entity, and the key information block received from the key information issue entity.

It is preferable that in such information recording medium manufacturing control method, the key information block includes a key information block storing key information acquirable only with decryption processing based on a key stored in a user device having authorized content use rights, and the key information acquirable from the key information block includes key information required in decryption processing of the encrypted content stored on the information recording medium.

In addition, it is preferable that the key information block includes an EKB (Enabling Key Block) capable of acquiring key information only with decryption processing which applies a stored key of a user device selected from a plurality of user devices set as leaves in a tree configuration.

Also, it is preferable that the verification step includes a step of performing verification of whether or not the key information issue request includes authorized requested data corresponding to an information recording medium manufacturing request based on signature verification processing of the content rights owning entity included in a key information issue request from the information recording medium manufacturing entity.

Furthermore, data communication performed among the content rights owning entity, the information recording medium manufacturing entity, and the key information issue entity is performed as data communication processing on condition that authorization of mutual authorization processing is satisfied, and further includes encryption processing of transmission data.

It is also preferable that information transmission processing between the content rights owning entity and the information recording medium manufacturing entity is performed as processing through a recording medium.

In addition, the content rights owning entity, the information recording medium manufacturing entity, and the key information issue entity may have a public key, corresponding to a public key certificate issued by a certificate authority, and a secret key; and communication between the entities is performed by mutual authorization under a public key encryption method.

Also the information recording medium manufacturing request and the key information issue request may include identification information of the content rights owning entity and the information recording medium manufacturing entity.

In addition, the key information issue request may include a public key certificate of the content rights owning entity; and the key information issue entity verifies a revoke status as an invalidation status of the public key certificate of the content rights owning entity, and, on condition that it is verified that it is not revoked, performs processing of providing the key information block for the information recording medium manufacturing entity.

Furthermore, the key information issue request includes content to be stored on an information recording medium or a hash value corresponding to the content.

Moreover, the information recording medium manufacturing step performs information recording medium manufacturing processing which applies an information recording medium manufacturing apparatus performing manufactured number recording processing.

Also the information recording medium manufacturing entity has a data writing machine licensed from a control entity of the information recording medium manufacturing control system; and on condition that writing permission information is received from the control entity, the information recording medium manufacturing step performs data writing processing on the information recording medium using the data writing machine.

Also, according to another preferred embodiment of the present invention, there is provided an information processing method for performing processing of creating information recording medium manufacturing request data provided with digital signature related to data including: content; identification data for each of a content rights owning entity and an information recording media manufacturing entity; and information recording medium manufactured number data.

According to another preferred embodiment of the present invention, there is provided an information processing method for creating key information issue request data corresponding to information recording medium manufacturing request data received from a content rights owning entity, wherein the key information issue request data includes: at least content or a hash value based on the content; identification data for each of the content rights owning entity and an information recording medium manufacturing entity; information recording medium manufactured number data; and digital signature of the content rights owning entity of each of the data.

According to still another preferred embodiment of the present invention, there is provided an information processing method for providing an information recording medium manufacturing entity with a key information block capable of acquiring key information applied to decryption of an encrypted content stored on an information recording medium in response to a key information issue request from the information recording medium manufacturing entity, the method including: processing a signature of a content rights owning entity included in the key information issue request; and transmitting the key information block to the information recording medium manufacturing entity based on verification of signature by the verification mechanism, on condition that it is verified that the key information issue request is an authorized key information issue request data corresponding to an information recording medium manufacturing request issued by the content rights owning entity.

According to a further preferred embodiment of the present invention, there is provided a computer-readable program for causing a computer to execute a process of creating information recording medium manufacturing request data provided with digital signature related to data including: content; identification data for each of a content rights owning entity and an information recording media manufacturing entity; and information recording medium manufactured number data.

Also, another preferred embodiment of the present invention provides a computer-readable program for causing a computer to execute the processes of an information processing method for creating key information issue request data corresponding to information recording medium manufacturing request data received from a content rights owning entity, wherein the key information issue request data includes: at least content or a hash value based on the content; identification data for each of the content rights owning entity and an information recording medium manufacturing entity; information recording medium manufactured number data; and digital signature of the content rights owning entity of each of the data.

According to another preferred embodiment of the present invention, there is provided a computer-readable program for causing a computer to execute the processes of an information processing method for providing an information recording medium manufacturing entity with a key information block capable of acquiring key information applied to decryption of an encrypted content stored on an information recording medium in response to a key information issue request from the information recording medium manufacturing entity, the method including:
processing a signature of a content rights owning entity included in the key information issue request; and
transmitting the key information block to the information recording medium manufacturing entity based on verification of signature by the verification mechanism, on condition that it is verified that the key information issue request is an authorized key information issue request data corresponding to an information recording medium manufacturing request issued by the content rights owning entity.

It should be noted that the computer program of the present invention is a computer program which can be provided through a storage medium provided in a computer-readable form for a computer system capable of executing various program codes, a communication medium, for example a recording medium such as a CD, an FD, and an MO, or a communication medium such as a network. Such a program is provided in a computer-readable form to realize processing in accordance with the program on the computer system.

It should be noted that the system in the specification is a logical set configuration of a plurality of apparatuses, and the apparatuses of the respective configurations are not limited to being provided within a same or singular housing.

According to the configuration of the present invention, the information recording medium manufacturing entity (DM: Disc Manufacturer) is formed to send the key information (EKB) issue request created on the basis of the information recording medium (disc) manufacturing request (DMR: Disc Manufacturing Request) issued by the content rights owner (CO: Content Owner) to the key information (EKB) issue center, verify the key information (EKB) issue request in the key information (EKB) issue center. In other words, verify whether the key information (EKB) issue request is authorized request data corresponding to the authorized information recording medium (disc) manufacturing request (DMR: Disc Manufacturing Request), and on condition that the verification is satisfied, issue the key information (EKB) to be stored on the information recording medium. Thus, for a content acquired from an unauthorized route, acquisition of the key information (EKB) from the key information (EKB) issue center is impossible, storage of the key information (EKB) corresponding to the encrypted content to be stored on the information recording medium is impossible, and manufacturing of a disc which stores an improperly acquired content is prevented.

Also, according to the configuration of the present invention, for a content acquired from an unauthorized route without a formal information recording medium (disc) manufacturing request (DMR: Disc Manufacturing Request) issued by the content rights owner (CO: Content Owner), the key information (EKB) from the key information (EKB) issue center cannot be acquired, and manufacturing of the information recording medium which stores the key information (EKB) is made impossible.

In the configuration of the present invention, as the processing of verifying whether or not the key information (EKB) issue request is authorized request data corresponding to the authorized information recording medium (disc) manufacturing request (DMR: Disc Manufacturing Request), the key information (EKB) issue center performs the signature verification processing of the content rights owner (CO: Content Owner) included in the key information (EKB) issue request received from the information recording medium manufacturing entity (DM: Disc Manufacturer). Thus, falsification in the information recording medium manufacturing entity (DM: Disc Manufacturer) is impossible, and it can be reliably determined whether or not the key information (EKB) issue request corresponds to the authorized information recording medium (disc) manufacturing request (DM: Disc Manufacturing Request).

Embodiments of the invention will now be described, by way of example only, with reference to the accompanying drawings in which:
Fig. 1 shows a diagram which explains an information recording medium control configuration in accordance with the present invention;
Fig. 2 shows a diagram which explains a data configuration stored on an information recording medium;
Fig. 3 shows a diagram which explains a hierarchy type tree structure applied to encryption processing and distribution processing of various keys and data;
Fig. 4 shows a diagram which shows a distribution example and a decryption processing example using an enabling key block (EKB) of a content key;
Fig. 5 shows a diagram which explains a data configuration of information recording medium manufacturing request data and EKB issue request data;
Fig. 6 shows a diagram which explains a data configuration of information recording medium manufacturing request data and EKB issue request data;
Fig. 7 shows a diagram which explains a configuration example of an information processing apparatus in each entity;
Fig. 8 shows a flow chart which explains a processing sequence of a content rights owner (CO: Content Owner);
Fig. 9 shows a flow chart which explains a processing sequence of an information recording medium manufacturing entity (DM: Disc Manufacturer);
Fig. 10 shows a flow chart which explains a disc manufacturing processing sequence of the information recording medium manufacturing entity (DM: Disc Manufacturer);
Fig. 11 shows a flow chart which explains a processing sequence of a key information (EKB) issue center;
Fig. 12 shows a diagram which explains an information recording medium control configuration in accordance with the present invention; and
Fig. 13 shows a flow chart which explains a disc manufacturing sequence of the information recording medium manufacturing entity (DM: Disc Manufacturer).

In the following, description is made in detail for an information recording medium manufacturing control system, an information processing apparatus and method, and a computer program with reference to the drawings. It should be noted that the description is made in the order described below.
1. Manufacturing Process Outlines of Information Recording Medium
2. Configuration of EKB and Key Acquisition Processing
3. Details of Manufacturing Control Processing of Information Recording Medium
4. Information Processing Apparatus Configuration of Each Entity
5. Processing Sequence of Each Entity
6. Data Writing by License Apparatus

### [1. Manufacturing Process Outlines of Information Recording Medium]

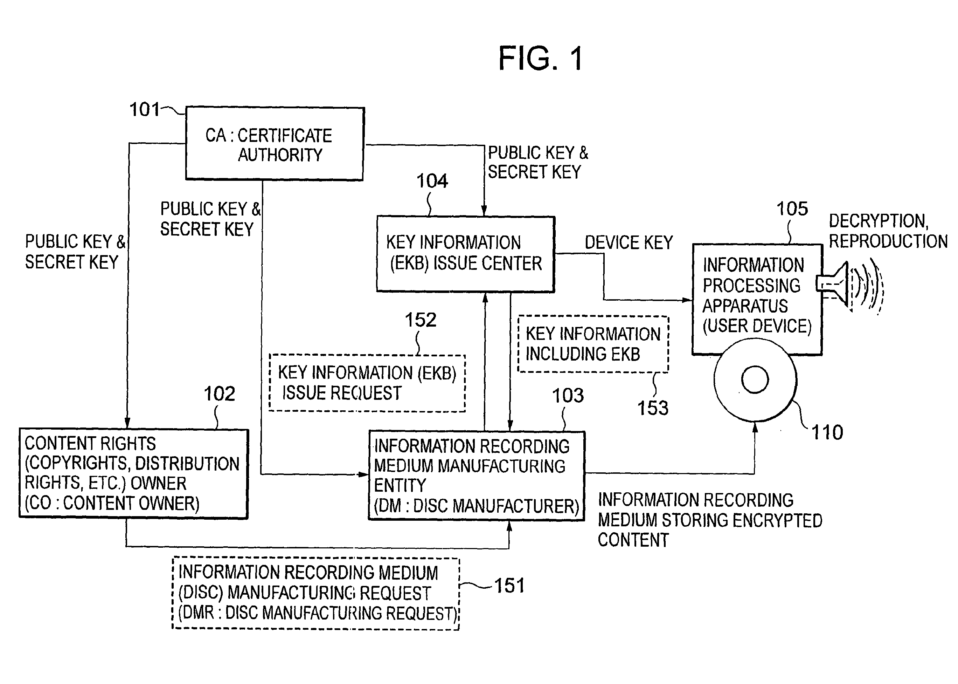

First, manufacturing process outlines of an information recording medium are described with reference to Figs. 1 and afterward. In the information recording medium, various content such as music, images, and programs are stored and provided for users. A content rights owner (CO: Content Owner) 102 who has the copyrights or the distribution rights of a content provides the content for an information recording medium (disc) manufacturing entity (DM: Disc Manufacturer) 103 based on a predetermined procedure, and the information recording medium (disc) manufacturing entity 103 stores the received content on a disc to manufacture an information recording medium 110 and provides it for a user through a distributor, not shown. The user loads the information recording medium on an information processing apparatus (a user device) 105 such as a data recording/reproduction apparatus and a PC (Personal Computer) to perform reproduction and use of the content.

The content rights owner 102 is a content owner who has the right to copy and provide the content such as the copyrights or the distribution rights of the content. For example, it is made of a content owner such as a movie company. The content rights owner 102 creates an edited content to be stored on an information recording medium such as a CD and a DVD, for example from an original content and provides the edited content for the information recording medium manufacturing entity 103. Then, the information recording medium manufacturing entity 103 duplicates (replicates) CDs, DVDs or the like in large amounts as media to be provided for users under certain procedures based on the received content to manufacture and provide the information recording medium 110 for users.

In a manufacturing control configuration of content storing information recording media of the present invention, a CA (Certificate Authority) 101, a key information (EKB) issue center 104 are present in addition to the content rights owner 102 and the information recording medium manufacturing entity 103. Description is made for the functions and the roles of the respective entities.

The CA (Certificate Authority) 101 issues, to each entity, after each is investigated in terms of credit, a Public Key based on public key encryption, a Secret key, and a Public Key Certificate for ensuring validity of the Public Key. In addition, it issues as required a Certificate revocation list with an issued Public Key Certificate as invalid information and provides it for each entity.

The Key Information (EKB) Issue Center 104 which is a facility which issues key information (EKB). The EKB is an Enabling Key Block and a key information block which stores key information applied to decryption of certain confidential information, for example a content. For example, it is a key information block capable of acquiring confidential information (key information) only through decryption processing based on a device key stored in a particular device. For example, it is formed as a key information block capable of acquiring key information necessary for decryption of content through processing (decryption) based on a device key stored in an information processing apparatus of a user who has an effective license.

The EKB is formed as a key information block capable of acquiring key information only through decryption processing to which a stored key of a user device selected from a plurality of user devices set to leaves of a tree structure is applied.

The EKB is a key information block capable of key acquisition only with a device key stored in a user device which has an effective license. Processing (decryption) and key acquisition are disabled with a device key stored in a user device which is subjected to invalidation (revoke processing). The key information (EKB) issue center 104 can perform a structure change of the EKB to create an EKB capable of decryption only with a device key stored in a particular user device as effectiveness of the license to a user device is changed. The EKB is recorded together with a content in the information recording medium 110 which stores the encrypted content and provided for a user. The configuration of the EKB and key acquisition processing are later described in detail.

The content rights owner (CO: Content Owner) 102 which is an entity which has the right to copy and provide a content such as the copyrights, the distribution rights and the like of the content. Specifically, it is formed of a movie company, a record company or the like. The content rights owner (CO: Content Owner) 102 may have its own content editing (authoring) facility to perform editing of a content, or may request editing (authoring) of a content from an authoring studio as a separate entity. The content rights owner (CO: Content Owner) 102 has at least the right to copy and provide a content after editing (authoring).

The information recording medium manufacturing entity (DM: Disc Manufacturer) 103 which is an entity manufacturing an information recording medium which stores a content received from the content rights owner (CO: Content Owner) 102 based on a request from the content rights owner (CO: Content Owner) 102. For example, it has a disc manufacturing apparatus such as CDs and DVDs and uses it to manufacture an information recording medium which stores a content received from the content rights owner (CO: Content Owner) 102.

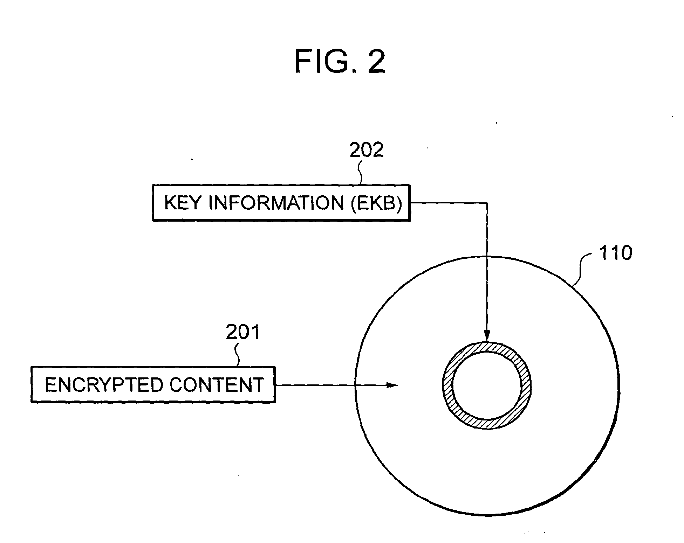

In the information recording medium 110 manufactured by the information recording medium manufacturing entity (DM: Disc Manufacturer) 103, as shown in Fig. 2, an encrypted content 201 and a key information (EKB) 202 for acquiring key information necessary for decryption processing of the encrypted content 201 are stored.

A user performs decryption of the key information (EKB) 202 using a device key stored previously in the information processing apparatus 105 in the information processing apparatus 105 to acquire the key information necessary for decryption processing of the encrypted content 201, and performs decryption processing of the encrypted content 201 based on the acquired information to perform reproduction and use of the content. It should be noted that the key information acquired by the decryption of the key information (EKB) 202 may be applied directly as a decryption key of the encrypted content or a decryption key for the encrypted content may be acquired through encryption processing based on other information. In any case, a user device having a device key capable of decryption of the key information (EKB) 202 is only a user device having an authorized license.

The key information (EKB) 202 can be processed (decrypted) only with a device key stored in an information processing apparatus of a user who has an effective license, and cannot be processed with a device key stored in a user device which is subjected to invalidation (revoke processing). This is provided for a user device (an information processing apparatus) in an information delivery method according to a so-called hierarchy type tree structure.

### [2. Configuration of EKB and Key Acquisition Processing]

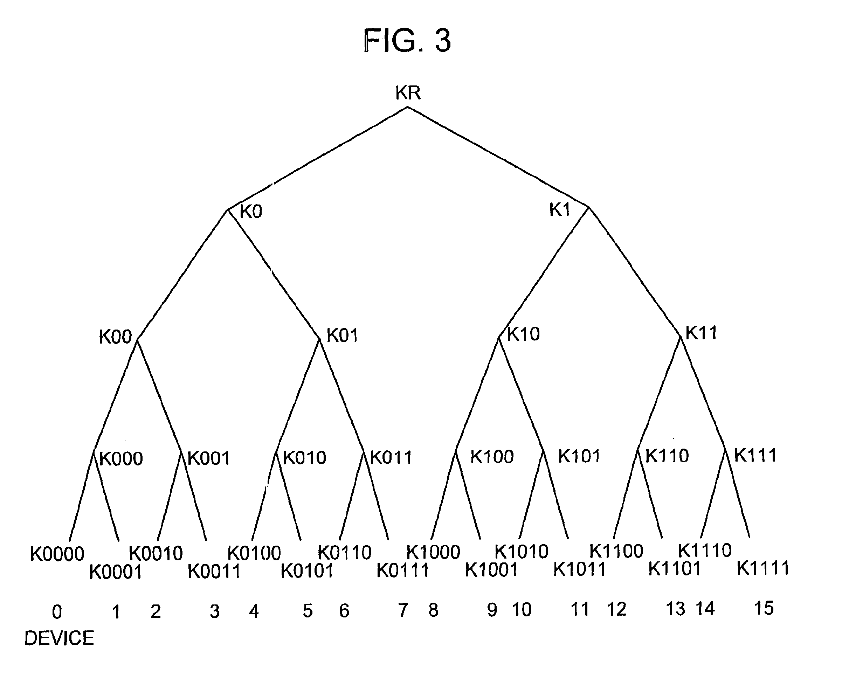

The configuration of EKB and key acquisition processing are described with reference to the drawings. Numbers 0 to 15 shown at the lowest stage in Fig. 3 are user devices as information processing apparatuses which perform, for example content use. In other words, each leaf in a hierarchical tree structure shown in Fig. 3 is each device.

Each of the devices 0 to 15 stores, in a memory, a key set (device key (DNK: Device Node Key)) formed of key (node keys) assigned to nodes from its own leaf to a root in the hierarchical tree structure and a leaf key of each leaf at the time of manufacturing or shipment or after that. K0000 to K1111 shown at the lowest stage in Fig. 3 are leaf keys assigned to the respective devices 0 to 15, respectively, and keys KR to K111 described from KR (root key) at the highest stage to a second node from the lowest stage are node keys.

In the tree structure shown in Fig. 3, for example the device 0 owns the leaf key K0000 and the node keys K000, K00, K0, KR as a device key. The device 5 owns K0101, K010, K01, K0, KR. The device 15 owns K1111, K111, K11, K1, KR. It should be noted that only 16 devices from 0 to 15 are described in the tree in Fig. 3, and the tree structure is shown as a balanced symmetrical configuration of a four-stage structure, but it is possible that more devices are formed in the tree and a configuration and a different number of stages is provided in each part of the tree.

In addition, the respective devices included in the tree structure in Fig. 3 include various types of devices which use various recording media, for example, memories of an embedded type or freely removable media such as DVDs, CDs, MDs, flash memories, etc. Also, various application services can coexist. The hierarchical tree structure which is a content or key distribution configuration shown in Fig. 3 is applied on the coexisting configuration of such different devices and different applications.

In a system in which these various devices and applications coexist, for example a portion surrounded by a dotted line in Fig. 3. In other words, the devices 0, 1, 2, 3 are set as one group. For example, only the devices included in the group surrounded by the dotted line hold authorized use rights of the encrypted content stored on the information recording medium, i. e., the license. In this case, only the devices 0, 1, 2, 3 set the EKB capable of acquiring a key applied to content decryption to store it on the information recording medium which stores the encrypted content.

As apparent from Fig. 3, the three devices 0, 1, 2, 3 included in one group hold common keys K00, K0, KR as DNKs (Device Node Key) stored in the respective devices.

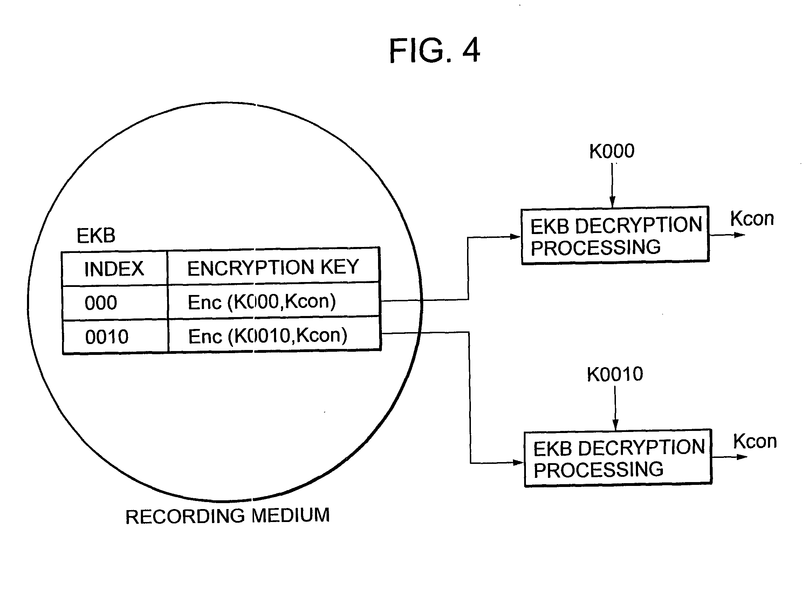

In this case, the configuration of the EKB allowing only the devices 0, 1, 2 to acquire a content key Kcon applied to content decryption is a configuration shown in Fig. 4, for example. Specifically, the EKB is set as

| | |
|---|---|
| index | encryption data |
| 000 | Enc (K000, Kcon) |
| 0010 | Enc (K0010, Kcon). |

It should be noted that Enc (Kx, Ky) means encrypted data by encrypting data Ky with key Kx. In this case, the devices 0, 1 can decrypt encrypted data of index [000] by using the device key [K000] held thereby, and the device 2 can decrypt encrypted data of index [0010] of the aforementioned EKB by using the device key [K0010], and the content key Knon can be acquired by decryption processing of the respective encrypted data. The other devices do not hold any of the device keys [K000], [K0010], and cannot acquire content keys by decrypting the EKB even when it receives the EKB having the configuration shown in Fig. 4.

In this manner, the EKB is configured as a key information block which can provide only a particular device with confidential information such as the content key which can be processed only in an arbitrary selected device by setting as configuration data in accordance with a device having a license. The key information (EKB) issue center 104 creates the EKB which can be processed only in a device allowing use of the content, and provides it for the information recording medium manufacturing entity 103. The information recording medium manufacturing entity 103 stores this EKB together with the encrypted content on the information recording medium 110 and provides it for a user.

### [3. Details of Manufacturing Control Processing of Information Recording Medium]

Returning to Fig. 1, the control configuration in manufacturing an information recording medium is described. It is assumed that the content rights owner (CO: Content Owner) 102 owns a content after editing (authoring) for storage on an information recording medium. The content rights owner (CO: Content Owner) 102 sends an information recording medium (disc) manufacturing request (DMR: Disc Manufacturing Request) 151 to the information recording medium manufacturing entity 103.

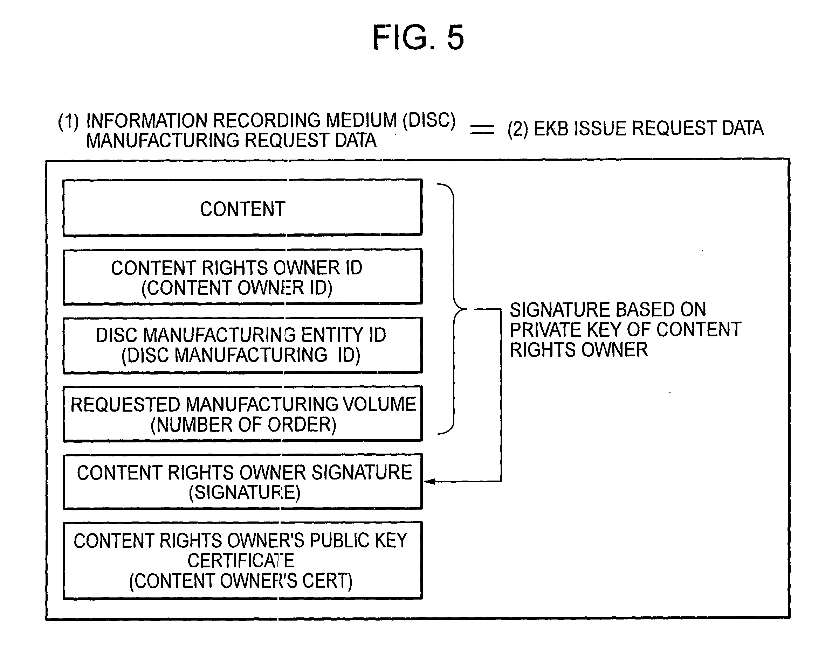

An example of the data format of the information recording medium (disc) manufacturing request (DMR: Disc Manufacturing Request) 151 is shown in Fig. 5. The information recording medium (disc) manufacturing request (DMR: Disc Manufacturing Request) data shown in Fig. 5 includes the following data.
(1) Content to be stored on a disc
(2) ID (Identifier) of the content rights owner (CM: Content Owner)
(3) ID (Identifier) of the information recording medium manufacturing entity (DM: Disc Manufacturer)
(4) Requested volume of manufacturing of information recording media (discs) (Number of order) which is the number of order indicating how many discs the content rights owner (CO: Content Owner) allows manufacturing from the content provided thereby.

In addition, as electronic signature information for the aforementioned data (1) to (4), a digital signature (Signature) created by using a Secret key of the content rights owner (CO: Content Owner) and a public key certificate (Content Owner's Cert) which stores a public key of the content rights owner (CO: Content Owner) are included. It should be noted that, in one example, if the public key certificate (Content Owner's Cert) of the content rights owner (CO: Content Owner) is stored by the information recording medium manufacturing entity, the public key certificate (Content Owner's Cert) of the content rights owner (CO: Content Owner) need not be sent in the second request or afterward to reduce the load.

The digital signature is data which can be created only by a particular entity for certain data (such as one which is difficult to create by another entity in terms of calculation amounts), and signature verification processing is performed in accordance with a predetermined sequence to allow determination of the presence or absence of falsification of data subjected to the signature.

As a method for the digital signature, a DSA (Digital Signature Algorithm), an elliptical DSA, or a method according to an RSA encryption method is applicable. The DSA and RSA methods are introduced, for example, "Current Encryption" written by Okamoto Tatsuaki, Yamamoto Hirosuke, published by Sangyo Tosho, and the elliptical DSA is under consideration at present in IEEE-P1363 standards.

It should be noted that information other than the aforementioned data (1) to (4) may be included in the information recording medium (disc) manufacturing request (DMR: Disc Manufacturing Request) 151. For example, information may be included such as copy control information of the content and usage permission information (usage rule) of the content such as the number/time of allowed reproduction of the content. The digital signature (Signature) created by using the Secret key of the content rights owner (CO: Content Owner) is created for the data including these additional information. Thus, data falsification by another entity or a user is prevented. In addition, as an example, the information recording medium (disc) manufacturing request (DMR) may include identification information of the individual DMRs such as serial numbers, time information of the DMR issued, and the like. By doing so, it is possible to prevent repeated use of certain information recording medium (disc) manufacturing request (DMR).

This information is stored together with the content on the information recording medium, and in content reproduction processing on the use device side, content use is performed under a content use processing program which performs processing in accordance with the copy control information and the number/time of allowed reproduction of the content, thereby allowing use of the content in accordance with the additional information.

The information recording medium manufacturing entity (DM: Disc Manufacturer) 103 which received the information recording medium (disc) manufacturing request (DMR: Disc Manufacturing Request) 151 having the data configuration shown in Fig. 5 verifies the public key certificate (Content Owner's Cert) included in the information recording medium (disc) manufacturing request (DMR) 151 by using the verification key (the public key) of the CA. If verification fails, subsequent processing is not performed. If verification is successful, the public key of the content rights owner (CO: Content Owner) 102 is taken from this certificate, and the taken public key is applied to perform verification processing of the digital signature (Signature) included in the information recording medium (disc) manufacturing request (DMR) 151. With the verification processing of the digital signature (Signature), it is verified that the aforementioned data (1) to (4) are authorized data not falsified.

It should be noted that it is verified whether or not the identifier (ID) of the content rights owner (CO: Content Owner) 102 is described in a public key certificate revocation (invalid) list issued by the CA (Certificate Authority) 101, and if there is description in the list, the verification is set to fail since the content rights owner (CO: Content Owner) 102 is an entity determined as an invalid entity, and the information recording medium (disc) manufacturing request (DMR) 151 is not received.

When the identifier (ID) of the content rights owner (CO: Content Owner) 102 is not described in the public key certificate revocation (invalid) list issued by the CA (Certificate Authority) 101, and the verification processing of the aforementioned public key certificate and the digital signature (Signature) of the information recording medium (disc) manufacturing request (DMR: Disc Manufacturing Request) reveals that the data (1) to (4) of the aforementioned public key certificate and the information recording medium (disc) manufacturing request (DMR: Disc Manufacturing Request) are authorized data not falsified, the information recording medium manufacturing entity (DM: Disc Manufacturer) 103 sends a key information (EKB) issue request 152 to the key information (EKB) issue center 104.

The key information (EKB) issue request 152 includes the same data as the format of the information recording medium (disc) manufacturing request (DMR: Disc Manufacturing Request) 151 described with reference to Fig. 5.

It is preferable that, prior to the transmission of the key information (EKB) issue request 152 from the information recording medium manufacturing entity (DM: Disc Manufacturer) 103 to the key information (EKB) issue center 104, both the information recording medium manufacturing entity (DM: Disc Manufacturer) 103 and the key information (EKB) issue center 104 perform mutual authorization and session key sharing processing to check validity of both and share a session key for encryption of communication data to encrypt and transmit the communication data. In other words, the key information (EKB) issue request 152 with the session key.

It should be noted that, as the mutual authorization and session key sharing processing, mutual authorization processing (for example, ISO9798-3) based on a public key encryption method using mutual secret keys and public key certificates is applicable.

In addition, it is possible to use a configuration in which the digital signature of the information recording medium manufacturing entity (DM: Disc Manufacturer) 103 is added and the public key certificate of the information recording medium manufacturing entity (DM: Disc Manufacturer) 103 is attached to the key information (EKB) issue request 152 for the key information (EKB) issue center 104 from the information recording medium manufacturing entity (DM: Disc manufacturer) 103 for transmission. The digital signature is created through encryption processing for the configuration data of the key information (EKB) issue request 152 by applying the secret key of the information recording medium manufacturing entity (DM: Disc Manufacturer) 103.

The key information (EKB) issue center 104 verifies the public key certificate (Content Owner's Cert) of the content rights owner (CO: Content Owner) 102 included in the key information (EKB) issue request 152 by using the verification key (public key) of the CA. If verification fails, subsequent processing is not performed. If verification is successful, the public key of the content rights owner (CO: Content Owner) 102 is taken from this certificate, and the taken public key is applied to perform verification processing of the digital signature (Signature) of the content rights owner (CO: Content Owner) 102 included in the key information (EKB) issue request 152. With the verification processing of the digital signature (Signature), the key information (EKB) issue center 104 checks that the data included in the key information (EKB) issue request 152 is a request corresponding to an authorized information recording medium (disc) manufacturing request DMR 151 issued by the content rights owner (CO: Content Owner) 102.

In addition, the key information (EKB) issue center 104 verifies the revoke status of the public key certificate (Content Owner's Cert) of the content rights owner (CO: Content Owner) 102 included in the key information (EKB) issue request 152, and performs signature verification after checking that it is not revoked. If it is revoked, the key information (EKB) issue processing is stopped.

It should be noted that, when the key information (EKB) issue request 152 includes the digital signature (Signature) of the information recording medium manufacturing entity (DM: Disc Manufacturer) 103 and a public key certificate (Disc Manufacturer's Cert), the key information (EKB) issue center 104 verifies the public key certificate (Disc Manufacturer's Cert) of the information recording medium manufacturing entity (DM: Disc Manufacturer) 103 by using the verification key (public key) of the CA. If verification fails, subsequent processing is not performed. If verification is successful, the public key of the information recording medium manufacturing entity (DM: Disc Manufacturer) 103 is taken from this certificate, and the taken public key is applied to perform verification processing of the digital signature (Signature) of the information recording medium manufacturing entity (DM: Disc Manufacturer) 103 included in the key information (EKB) issue request 152, and with the verification processing of the digital signature (Signature), it performs processing of checking that the key information (EKB) issue request 152 itself is authorized data not falsified. It should be noted that, in this case, the key information (EKB) issue center 104 performs checking that the public key certificate (Disc Manufacture's Cert) of the information recording medium manufacturing entity (DM: Disc Manufacturer) 103 is not revoked. If it is revoked, the key information (EKB) issue processing is stopped.

When the key information (EKB) issue center 104 checks the validity of the key information (EKB) issue request 152. In other words, that the data included in the key information (EKB) issue request 152 is a request for the authorized information recording medium (disc) manufacturing request (DMR) 151 issued by the content rights owner (CO: Content Owner) 102 through the aforementioned processing, it sends the key information 153 including the EKB to the information recording medium manufacturing entity (DM: Disc Manufacturer) 103 as a response to the request. It should be noted that, in such data transmission, encryption processing based on the session key is preferably performed before transmission.

It should be noted that, while it is possible to use a configuration in which the key information (EKB) issue center 104 creates the key information stored in the key information (EKB) and the key used for encryption of the content and transmits them to the information recording medium manufacturing entity (DM: Disc Manufacturer) 103, it is also possible to use a configuration in which on the side of the information recording medium manufacturing entity (DM: Disc Manufacturer) 103, the key applied to encryption processing of the content is created, the created key is sent to the key information (EKB) issue center 104, and the key information (EKB) issue center 104 creates the key information (EKB) storing this created key and sends it to the information recording medium manufacturing entity (DM: Disc Manufacturer) 103.

When the information recording medium manufacturing entity (DM: Disc Manufacturer) 103 receives the key information 153 including the EKB from the key information (EKB) issue center 104, it applies the encryption key corresponding to these key information, performs encryption processing of the content received from the content rights owner (CO: Content Owner) 102, creates the encrypted content to be stored on the information recording medium, and manufactures the information recording medium which stores the created encrypted content and the key information (EKB). The number of manufactured information recording media is a number corresponding to the requested manufacturing volume from the content rights owner (CO: Content Owner) 102.

It should be noted that the information recording medium manufacturing apparatus used by the information recording medium manufacturing entity (DM: Disc Manufacturer) 103 is preferably formed to have a configuration in which it performs processing of storing the number of manufactured discs corresponding to a particular EKB, for example, to store storage data in a memory. These data performs monitoring verified by the key information (EKB) issue center 104 or the content rights owner (CO: Content Owner) 102 as required. In addition, it is possible to use a configuration in which an information processing apparatus such as the key information (EKB) issue center 104 and the content rights owner (CO: Content Owner) 102 can communicate with an information recording medium manufacturing apparatus used by the information recording medium manufacturing entity (DM: Disc Manufacturer) 103, which is configured such that each entity performs communication with the information recording medium manufacturing apparatus used by the information recording medium manufacturing entity (DM: Disc Manufacturer) 103 to perform verification of storage data as required.

As described above, according to the configuration of the present invention, the information recording medium manufacturing entity (DM: Disc Manufacturer) 103 is formed to send the key information (EKB) issue request 152 created on the basis of the information recording medium (disc) manufacturing request (DMR: Disc Manufacturing Request) 151 issued by the content rights owner (CO: Content Owner) 102 to the key information (EKB) issue center 104, verify the key information (EKB) issue request 152 in the key information (EKB) issue center 104. In other words, verify whether the key information (EKB) issue request 152 is authorized request data corresponding to the authorized information recording medium (disc) manufacturing request (DMR: Disc Manufacturing Request) 151, and on condition that the verification is satisfied, issue the key information 153 including the key information (EKB) to be stored on the information recording medium 110. Thus, for a content acquired from an unauthorized route, acquisition of the key information 153 including the key information (EKB) from the key information (EKB) issue center 104 is impossible, storage of the key information (EKB) corresponding to the encrypted content to be stored on the information recording medium is impossible, and manufacturing of a disc which stores an improperly acquired content is prevented.

As described above, according to the configuration of the present invention, for a content acquired from an unauthorized route without a formal information recording medium (disc) manufacturing request (DMR: Disc Manufacturing Request) 151 issued by the content rights owner (CO: Content Owner) 102, the key information 153 including the key information (EKB) from the key information (EKB) issue center 104 cannot be acquired, and manufacturing of the information recording medium 110 which stores the key information (EKB) is impossible.

It should be noted that, as the processing of verifying whether or not the key information (EKB) issue request 152 is authorized request data corresponding to the authorized information recording medium (disc) manufacturing request (DMR: Disc Manufacturing Request), the key information (EKB) issue center 104 performs it as the signature verification processing of the content rights owner (CO: Content Owner) 102 included in the key information (EKB) issue request 151 received from the information recording medium manufacturing entity (DM: Disc Manufacturer) 103. Thus, falsification in the information recording medium manufacturing entity (DM: Disc Manufacturer) 103 is impossible, and the key information (EKB) issue center 104 can reliably determine whether or not the key information (EKB) issue request 152 corresponds to the authorized information recording medium (disc) manufacturing request (DM: Disc Manufacturing Request) 151.

In addition, while the above description has been made assuming that the key information (EKB) issue request 152 transmitted from the information recording medium manufacturing entity (DM: Disc Manufacturer) 103 to the key information (EKB) issue center 104 includes all the data included in the information recording medium (disc) manufacturing request (DMR: Disc Manufacturing Request) 151 to be transmitted from the content rights owner (CO: Content Owner) to the information recording medium manufacturing entity (DM: Disc Manufacturer) 103. In other words, includes the content data as well, there is a problem that transmission load is large if the capacity of the content data is large.

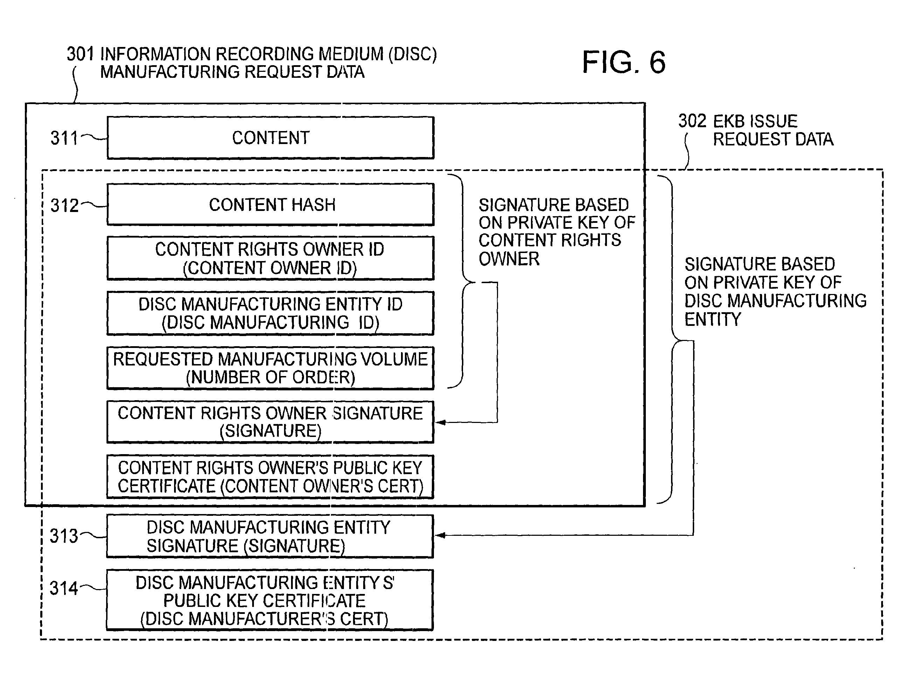

It is necessary to include the content in the information recording medium (disc) manufacturing request (DMR: Disc Manufacturing Request) transmitted from the content rights owner (CO: Content Owner) 102 to the information recording medium manufacturing entity (DM: Disc Manufacturer) 103, but the whole content is not necessarily included in the key information (EKB) issue request 152 transmitted from the information recording medium manufacturing entity (DM: Disc Manufacturer) 103 to the key information (EKB) issue center 104, so that, as shown in Fig. 6, the key information (EKB) issue center 152 may be configured not to include the content.

However, to allow check of a content in the key information (EKB) issue center 104, a hash value is created on the basis of content data, a signature is created on the basis of the secret key of the information recording medium manufacturing entity (DM: Disc Manufacturer) 103 for the data including the hash value and included in the key information (EKB) issue request 152.

As shown in Fig. 6, the content rights owner (CO: Content Owner) 102 creates a content hash 312 as a hash value based on content data 311 and adds a signature based on the secret key of the content rights owner (CO: Content Owner) 102 to the data including the content hash 312 to create information recording medium (disc) manufacturing request (DMR: Disc Manufacturing Request) data 301.

In addition, the information recording medium manufacturing entity (DM: Disc Manufacturer) 103 adds a signature 313 based on the secret key of the information recording medium manufacturing entity (DM: Disc Manufacturer) 103 to the data except for the content 311, attaches a public key certificate 314 which stores the public key of the information recording medium manufacturing entity (DM: Disc Manufacturer) 103, and transmits it to the key information (EKB) issue center 104 as key information (EKB) issue request data 312.

With such a data configuration, the data size of the key information (EKB) issue request 152 can be reduced significantly. If a dispute occurs later, it is possible to make sure that the information recording medium manufacturing entity (DM: Disc Manufacturer) 103 has performed correct processing when the information recording medium manufacturing entity (DMR: Disc Manufacturer) 103 can present the content data corresponding to the hash value.

It should be noted that the hash value is configured as data of a fixed length (for example, 160 bits) as a result of input of the content data into a hash function H. The hash function H is a function in which an output y=H(x) is easily calculated for data x of a range of arbitrary lengths, while it is difficult in terms of calculation amounts to determine x' (which may not be identical to x) which satisfies y=H(x') when y is given. As the hash function of the output length 160 bits, for example, SHA-1 is defined in FIP180-1 and 180-2.

### [4. Information Processing Apparatus Configuration for Each Entity]

Each of the content rights owner (CO: Content Owner) 102, the information recording medium manufacturing entity (DM: Disc Manufacturer) 103, and the key information (EKB) issue center 104 shown in Fig. 1 performs data transmission/reception processing of the data transmitted and received mutually. In other words, the information recording medium (disc) manufacturing request (DMR: Disc Manufacturing Request) 151 transmitted from the content rights owner (CO: Content Owner) 102 to the information recording medium manufacturing entity (DM: Disc Manufacturer) 103, the key information (EKB) issue center 152 transmitted from the information recording medium manufacturing entity DM: Disc Manufacturer) 103, the key information 153 including the EKB transmitted from the key information (EKB) issue center 104 to the information recording medium manufacturing entity (DM: ' Disc Manufacturer) 103, and the like, and also performs creation of transmission data, and verification processing of received data, and the like.

Thus, each of the content rights owner (CO: Content Owner) 102, the information recording medium manufacturing entity (DM: Disc Manufacturer) 103, and the key information (EKB) issue center 104 shown in Fig. 1 needs to have an information processing apparatus which performs creation processing of data to be transmitted, data transmission/reception processing, data verification processing and the like.

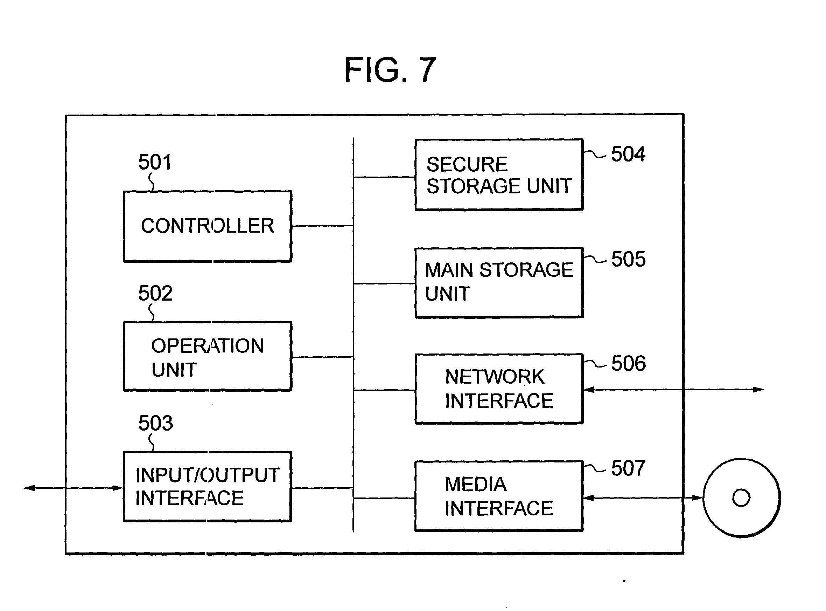

Fig. 7 shows a configuration example of the information processing apparatus possessed by each of these entities. The information processing apparatus has a controller 501, an operation unit 502, an input/output interface 503, a secure storage unit 504, a main storage unit 505, a network interface 506, and a media interface 507, as shown in Fig. 7.

The controller 501 is formed of a CPU having the function as a control unit which performs data processing in accordance wt ha computer program, for example. The operation unit 502 provides operation functions dedicated to creation of an encryption key, creation of random numbers, and encryption processing, for example. The input/output interface 503 is an interface which supports data input from an input means such as a keyboard and a mouse and data output processing to an output unit such as a display. The secure storage unit 504 is a storage unit which stores data to be held safely or securely such as an encryption key and various IDs, for example. The main storage unit 505 is a memory area which is used for a data processing program executed in the controller 501, for example, and a temporary storage processing parameter, a work area for execution a program, and the like. The secure storage unit 504 and the main storage unit 505 may be configured by memories such as a RAM, a ROM, and the like.

The network interface 506 is a network interface connected to the Internet, a dedicated line or the like and applied to communication processing with an external entity. The media interface 507 provides a read/write function from and to media such as CDs, DVDs, and MDs.

### [5. Processing Sequence of Each Entity]

Next, description is made for the processing sequence of each of the content rights owner (CO: Content Owner) 102, the information recording medium manufacturing entity (DM: Disc Manufacturer) 103, and the key information (EKB) issue center 104.

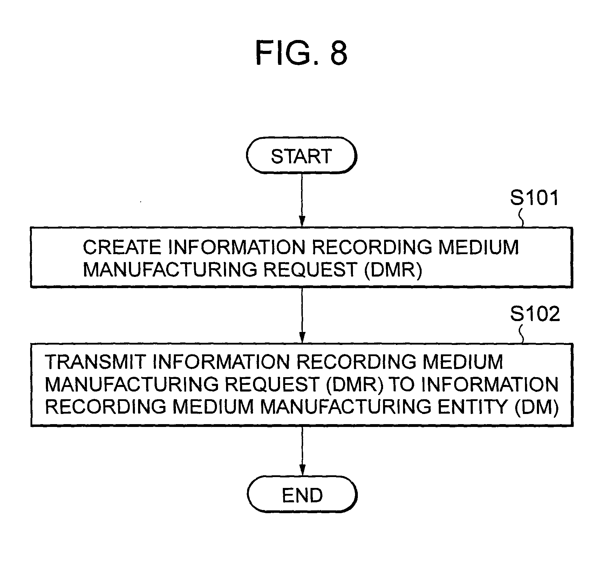

First, description is made as follows for the processing sequence performed by the content rights owner (CO: Content Owner) 102 with reference to Fig. 8.

At step S101, the content rights owner (CO: Content Owner) 102 creates the information recording medium (disc) manufacturing request (DMR: Disc Manufacturing Request) to be transmitted to the information recording medium manufacturing entity (DM: Disc Manufacturer) 103. The information recording medium (disc) manufacturing request (DMR: Disc Manufacturing Request) is data including the content to be stored on the information recording medium, the content rights owner ID, the disc manufacturing entity ID, the requested manufacturing volume, the content rights owner signature, and the content rights owner's public key certificate as described with reference to Fig. 5 and Fig. 6.

At step S102, the content rights owner (CO: Content Owner) 102 transmits the information recording medium (disc) manufacturing request (DMR: Disc Manufacturing Request) to the information recording medium manufacturing entity (DM: Disc Manufacturer) 103.

It should be noted that, when the information recording medium (disc) manufacturing request (DM: Disc Manufacturer) is transmitted from the content rights owner (CO: Content Owner) 102 with communication through a network, prior to the transmission of the information recording medium (disc) manufacturing request (DMR: Disc Manufacturing Request), mutual authorization and session key sharing processing is performed between the content rights owner (CO: Content Owner) 102 and the information recording mediummanufacturing entity (DM: Disc Manufacturer) 103, and on condition that the communication partners are verified, communication data. In other words, the information recording medium (disc) manufacturing request (DM: Disc Manufacturing Request) is encrypted with the session key and transmitted. In addition, as an example, the information recording medium (disc) manufacturing request (DM: Disc Manufacturing Request) may be transmitted with a recording medium such as a CD-R as a communication channel, and it is possible that content data which is large capacity data is transmitted with a recording medium as a communication channel and other data is transmitted through a network.

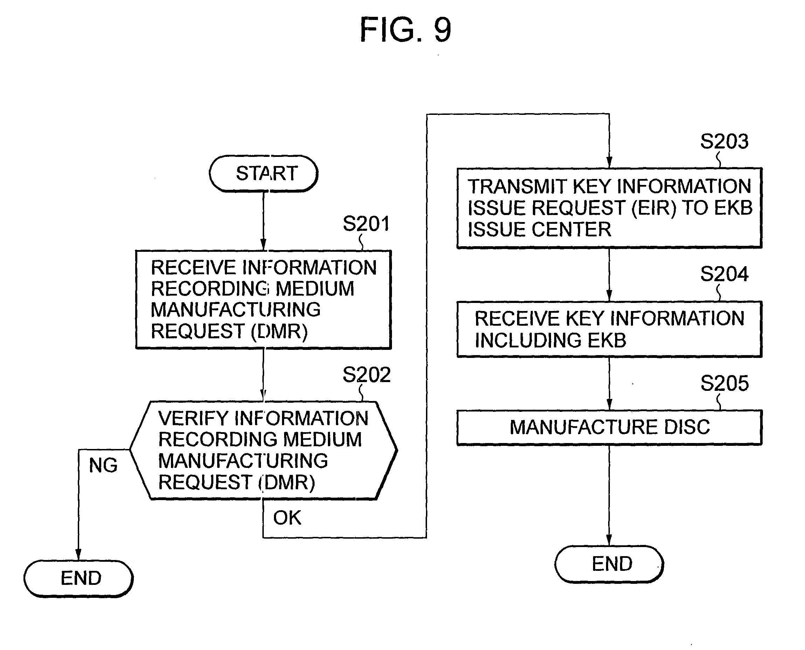

Next, the processing sequence performed by the information recording medium manufacturing entity (DM: Disc Manufacturer) 103 is described with reference to Fig. 9.

At step S201, the information recording medium manufacturing entity (DM: Disc Manufacturer) 103 receives the information recording medium (disc) manufacturing request (DMR: Disc Manufacturing Request) from the content rights owner (CO: Content Owner) 102.

At step S202, the information recording medium manufacturing entity (DM: Disc Manufacturer) 103 performs verification processing of the information recording medium (disc) manufacturing request (DMR: Disc Manufacturing Request). Specifically, the information recording medium manufacturing entity (DM: Disc Manufacturer) 103 verifies the public key certificate (Content Owner's Cert) included in the information recording medium (disc) manufacturing request (DMR) by using the verification key (public key) of CA. If verification fails, subsequent processing is not performed. If verification is successful, the public key of the content rights owner (CO: Content Owner) 102 is taken from this certificate, and the taken public key is applied to perform verification processing of the signature included in the information recording medium (disc) manufacturing request (DMR). When a signature verification error occurs, it determines that the information recording medium (DMC) manufacturing request (DMR) is unauthorized data falsified, for example, and ends the processing without performing subsequent processing.

It should be noted that, as described above, it is verified whether or not the identifier (ID) of the content rights owner (CO: Content Owner) 102 is described in the public key certificate revocation (invalid) list issued by the CA (Certificate Authority) 101, and if description in the list is found, the content rights owner (CO: Content Owner) 102 is an entity determined as an invalid entity, so that the verification fails and the information recording medium (disc) manufacturing request (DMR) 151 is not received.

With the signature verification, it is determined that the information recording medium (disc) manufacturing request (DMR) is authorized data, it proceeds to step S203 where the information recording medium manufacturing entity (DM: Disc Manufacturer) 103 sends the key information (EKB) issue request to the key information (EKB) issue center 104.

As described with reference to Fig. 5 and Fig. 6, any of various data configurations is applied to the key information (EKB) issue request, such as one formed of the same data as the format of the information recording medium (disc) manufacturing request (DM: Disc Manufacturing Request), or data including the hash value of the content, and the configuration including the signature of the information recording medium manufacturing entity (DM: Disc Manufacturer) 103 and the public key certificate.

Prior to the transmission of the key information (EKB) issue request from the information recording medium manufacturing entity (DM: Disc Manufacturer) 103 to the key information (EKB) issue center 104, both of the information recording medium manufacturing entity (DM: Disc Manufacturer) 103 and the key information (EKB) issue center 104 perform mutual authorization and session key sharing processing to check the validity of both and share the session key for communication data encryption to encrypt the communication data. In other words, the key information (EKB) issue request 152 with the session key for transmission.

At step S204, the information recording medium manufacturing entity (DM: Disc Manufacturer) 103 receives the key information including the EKB from the key information (EKB) issue center 104, and at step S205, applies the key included in the key information received from the key information (EKB) issue center 104 to perform encryption of the content received from the content rights owner (CO: Content Owner) 102 and writes in the disc to perform disc manufacturing processing.

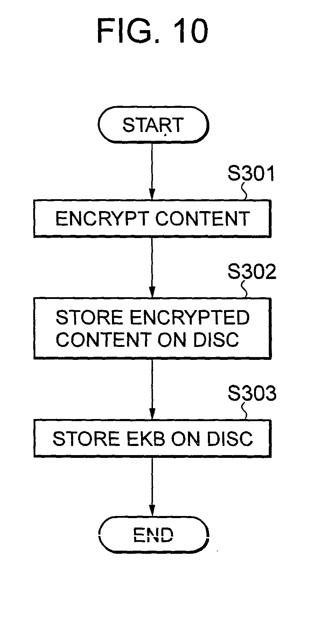

Fig. 10 shows a detailed sequence of the disc manufacturing processing performed by the information recording medium manufacturing entity (DM: Disc Manufacturer) 103. At step S301, the information recording medium manufacturing entity (DM: Disc Manufacturer) 103 applies the key included in the key information received from the key information (EKB) issue center 104 to perform encryption of the content received from the content rights owner (CO: Content Owner) 102. At step S302, the encrypted content is stored in the information recording medium (disc).

At step S303, the information recording medium manufacturing entity (DM: Disc Manufacturer) 103 stores the EKB received from the key information (EKB) issue center 104 on the information recording medium (disc).

It should be noted that the flow shown in Fig. 10 is the flow of manufacturing processing of a master disc, and the master disc manufactured with this processing flow is used to manufacture a plurality of discs. The number of manufacturing is the requested manufacturing volume included in the information recording medium (disc) manufacturing request (DMR: Disc Manufacturing Request) received from the content rights owner (CO: Content Owner) 102.

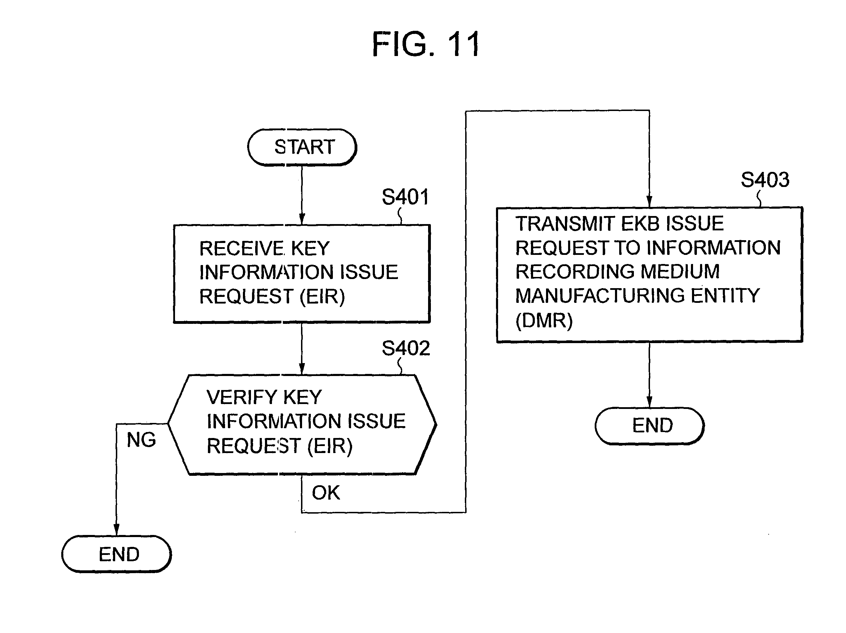

Next, the processing sequence of the key information (EKB) issue center 104 is described with reference to Fig. 11.

At step S401, the key information (EKB) issue center 104 receives the key information (EKB) issue request from the information recording medium manufacturing entity (DM: Disc Manufacturer) 103.

At step S402, the key information (EKB) issue center 104 performs the verification processing of the key information (EKB) issue request. The key information (EKB) issue center 104 verifies the public key certificate (Content Owner's Cert) of the content rights owner (CO: Content Owner) 102 included in the key information (EKB) issue request by using the verification key (public key). If the verification fails, subsequent processing is not performed. If verification is successful, the public key of the content rights owner (CO: Content Owner) 102 is taken from this certificate, and the taken public key is applied to perform verification processing of the digital signature (Signature) of the content rights owner (CO: Content Owner) 102 included in the key information (EKB). With the verification processing of the digital signature (Signature), the key information (EKB) issue center 104 makes sure that the data included in the key information (EKB) issue request is a request corresponding to the authorized information recording medium (disc) manufacturing request (DMR) issued by the content rights owner (CO: Content Owner) 102.

It should be noted that the key information (EKB) issue center 104 verifies the public key certificate (Disc Manufacture's Cert) of the information recording medium manufacturing entity (DM: Disc Manufacturer) 103 by using the verification key (public key) of the CA when the key information (EKB) issue request includes the digital signature (Signature) of the information recording medium manufacturing entity (DM: Disc Manufacturer) 103 and the public key certificate (Disc Manufacturer's Cert). If verification fails, subsequent processing is not performed. If verification is successful, the public key of the information recording medium manufacturing entity (DM: Disc Manufacturer) 103 is taken from this certificate, and the taken public key is applied to perform verification processing of the digital signature (Signature) include in the key information (EKB) issue request 152, and with the verification processing of the digital signature (Signature), it makes sure that the key information (EKB) issue request itself is valid data which is not falsified.

When even one results in an error in the aforementioned signature verification processing, it is determined that the key information (EKB) issue request is unauthorized data falsified, for example, and the processing is ended without performing subsequent processing.

When it is verified that the key information (EKB) issue request is a legitimate request corresponding to the valid information recording medium (disc) manufacturing request (DMR) issued by the content rights owner (CO: Content Owner) 102 based on the signature verification, the ken information (EKB) issue center 104 transmits the key information including the EKB to the information recording medium manufacturing entity (DM: Disc Manufacturer) 103 as a response to the key information (EKB) issue request. It should be noted that these data is preferably transmitted as encryption processed data based on the session key.

It should be noted that, as described above, while it is possible to use a configuration in which the key information stored in the key information (EKB) and the key used in encryption of the content are created by the key information (EKB) issue center 104 and transmitted to the information recording medium manufacturing entity (DM: Disc Manufacturer) 103, the key applied to encryption processing of the content is created on the side of the information recording medium manufacturing entity (DM: Disc Manufacturer) 103, the created key is transmitted to the key information (EKB) issue center 104, the key information (EKB) which stores this created key is created by the key information (EKB) issue center 104 and transmitted to the information recording medium manufacturing entity (DM: Disc Manufacturer) 103.

### [6. Data Writing by License Apparatus]

Next, manufacturing processing of the information recording medium by the information recording medium manufacturing entity (DM: Disc Manufacturer) is described for a configuration example of an apparatus which receives a license from a control center performing content control and performs processing of writing data by using a data write apparatus capable of carrying out special data write processing.

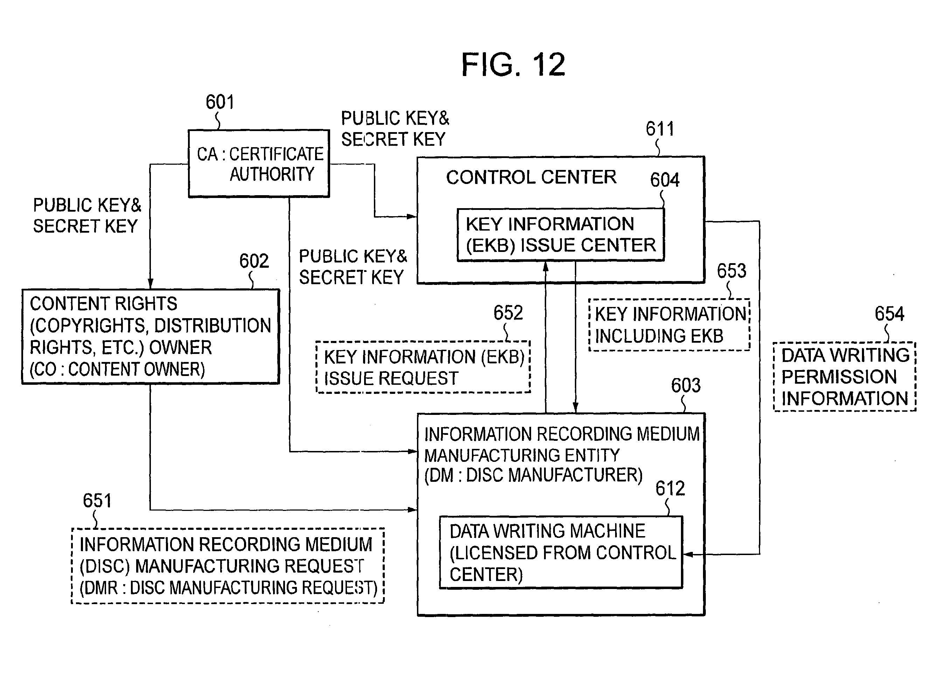

The processing configuration of an example of preferred embodiment of the present invention is described with reference to Fig. 12. In Fig. 12, a CA (Certificate Authority) 601 issues, to each entity, after each is investigated in terms of credit, a Public Key based on public key encryption, a Secrete Key, and a Public Key Certificate for ensuring validity of the Public Key. A content rights owner (CO: Content Owner) 602 is an entity which has the right to copy and provide a content such as the copyrights and the distribution rights of the content.

An information recording medium manufacturing entity (DM: Disc Manufacturer) 603 is an entity which manufactures information recording media storing the content received from the content rights owner (CO: Content Owner) 602 based on a request from the content rights owner (CO: Content Owner) 602. The information recording medium manufacturing entity has a data writing machine 612 which receives a license of a control center 611. The data writing machine 612 capable of carrying out special data writing processing is, for example, an apparatus enabled to embedding special data by using a fine difference in pit shape created in a disc, and an apparatus capable of writing data with special processing different from typical data writing processing such as a content.

The control center 611 has a key information (EKB) issue center 604 as a facility which issues key information (EKB) and lends the data writing machine 612 to the information recording medium manufacturing entity (DM: Disc Manufacturer) 603 with the license.

It should be noted that, in the present example of preferred embodiment of the present invention, description is made for the configuration in which the control center 611 has the key information (EKB) issue center 604, although these entities may be formed as separately independent entities.

For manufacturing of discs, first, an information recording medium (disc) manufacturing request (DM: Disc Manufacturing Request) 651 is transmitted from the content rights owner (CO: Content Owner) 602 to the information recording medium manufacturing entity (DM: Disc Manufacturer) 603. The data format is the same as that in the previous embodiment and has the data configuration described with reference to Fig. 5 and Fig. 6.

After verification of the information recording medium (disc) manufacturing request (DMR: Disc Manufacturing Request) 651, the information recording medium manufacturing entity (DM: Disc Manufacturer) 603 a key information (EKB) issue request 652 to the key information (EKB) issue center 604. The key information (EKB) issue center 652 has the same data configuration as that in the previous embodiment (see Fig. 5 and Fig. 6).

When the validity of the key information (EKB) issue request 652 is verified, the key information (EKB) issue center 604 transmits key information 653 including the EKB as a response to the request to the information recording medium manufacturing entity (DM: Disc Manufacturer) 603. In addition, the control center 611 having the key information (EKB) issue center 604 transmits data writing permission information 654 as use permission information of the data writing machine 612 which is sent to the information recording medium manufacturing entity (DM: Disc Manufacturer) 603 with the license.

When the information recording medium manufacturing entity (DM: Disc Manufacturer) 603 receives the key information including the EKB from the key information (EKB) issue center 604, and receives the data writing permission information 654 from the control center 611, it applies an encryption key acquired on the basis of the key information 653 including the EKB to perform encryption processing of the content received from the content rights owner (CO: Content Owner) 602, creates the encrypted content to be stored on an information recording medium, and manufactures an information recording medium which stores the created encrypted content and the key information (EKB). In addition, the information recording medium manufacturing entity (DM: Disc Manufacturer) 603 uses the data writing machine 612 to perform writing of special data based on the data writing permission information 654 from the control center 611.

It should be noted that the information written by using the data writing machine 612 is, for example, an encryption key required in decryption processing of the encrypted content stored on the information recording medium, or encryption key creation information, or identification data such as a dick, a content, an entity.

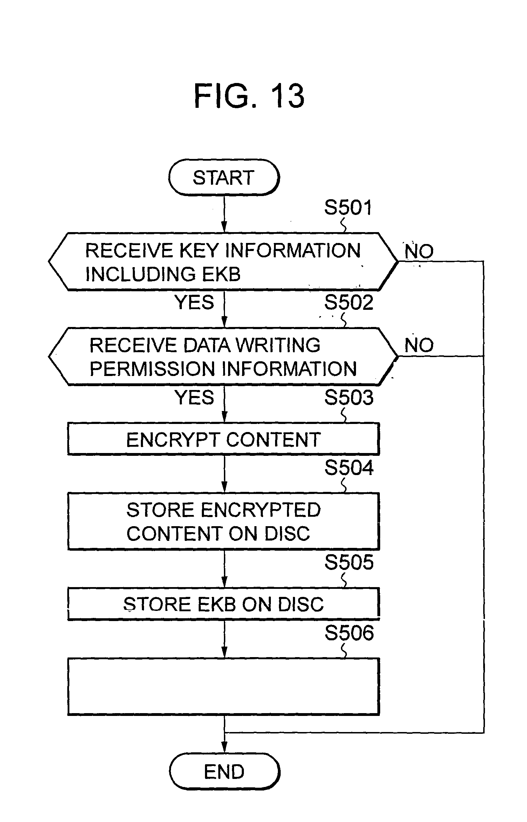

Description is made for a detailed sequence of the disc manufacturing processing performed by the information recording medium manufacturing entity (DM: Disc Manufacturer) 603 in the embodiment with reference to Fig. 13.

The information recording medium manufacturing entity (DM: Disc Manufacturer) 603 performs reception check for the key information including the EKB from the key information (EKB) issue center 604 at step S501, and at step S502, checks reception of the data writing information from the control center 611. If one of the information is not received, the disc manufacturing it not performed.

At step S503, based on the key information including the EKB received from the key information (EKB) issue center 604, a content encryption key is acquired to perform encryption the content received from the content rights owner (CO: Content Owner) 602. At step S504, the encrypted content is stored on the information recording medium (disc).

At step S505, the information recording medium manufacturing entity (DM: Disc Manufacturer) 603 stores the EKB received from the key information (EKB) issue center 604 on the information recording medium (disc). In addition, at step S506, the information recording medium manufacturing entity (DM: Disc Manufacturer) 603 uses the data writing machine 612 to perform writing of special data based on the data writing permission information 654 from the control center 611.

The data writing machine 612 usable by the information recording medium manufacturing entity (DM: Disc Manufacturer) 603 with the license from the control center 611 has the configuration which performs processing of storing the number of manufactured discs corresponding to a specific EKB and stores storage data in a memory, for example.

The control center 611 performs inspection for verifying data on manufactured disc numbers stored in the data writing machine 612 as required. In addition, it discloses the data on manufactured disc numbers acquired in the inspection to the key information (EKB) issue center 604 and the content rights owner (CO: Content Owner) 602.

Alternatively, it is possible to use a configuration in which the data writing machine 612 is configured to enable continual or intermittent communication with the control center 611 or another entity to allow monitoring of the situation such as disc manufacturing is performed in accordance with rules or if more discs than the number requested from the content rights owner (CO: Content Owner) 602 are manufactured.

The present invention has been described in the above with reference to the specific examples of preferred embodiments. However, it is obvious that those of ordinary skill in the art may make modifications, substitutions, variations, combinations or subcombinations of the embodiments without departing from the scope of the present invention. In other words, the present invention has been disclosed in the form of illustration, and should not be interpreted as limitative as to determine the scope of the present invention.

It should be noted that the series of processing described in the specification can be performed by hardware or software, or a combined configuration of both. When the processing is performed by software, it is possible that a program recording the processing sequence is installed in a memory in a computer incorporated in dedicated hardware for execution, or a program is installed in a general-purpose computer capable of performing various types of processing for execution.

For example, the program may be previously stored in hardware or a ROM (Read Only Memory) as a recording medium. Alternatively, the program may be stored (recorded) temporarily or permanently on a removable recording medium such as a flexible disc, a CD-ROM (Compact Disc Read Only Memory), an MO (Magneto optical) disc, a DVD (Digital Versatile Disc), a magnetic disc, and/or a semiconductor memory or storage device. Such a removable recording medium can be provided within a so-called package software.

It should be noted that, install from a removable recording medium to a computer as described above, the program can transferred wirelessly from a download site to a computer, or transferred by wire to a computer through a network such as a LAN (Local Area Network) and the Internet, and the computer can receive the program thus transferred and install it on a recording medium such as a built-in hard disc.

Also, the various types of processing described in the specification may be performed not only in time series in accordance with the description but also in parallel or separately in accordance with the processing performance of an apparatus which performs the processing or as required. In addition, in the specification, the system is a logical set configuration of a plurality of apparatuses, and the apparatuses of the respective configurations are not limited to the same housing.

As described above, according to the configuration of the present invention, the information recording medium manufacturing entity (DM: Disc Manufacturer) is configured to transmit the key information (EKB) issue request created on the basis of the information recording medium (disc) manufacturing request (DMR: Disc Manufacturing Request) issued by the content rights owner (CO: Content Owner) to the key information (EKB) issue center, verify the key information (EKB) issue request in the key information (EKB) issue center. In other words, verify whether the key information (EKB) issue request is authorized request data corresponding to the authorized information recording medium (disc) manufacturing request (DMR: Disc Manufacturing Request), and on condition that this verification is satisfied, issue the key information (EKB) to be stored on the information recording medium. Thus, for a content acquired from an unauthorized route, acquisition of the key information (EKB) from the key information (EKB) issue center is impossible, storage of the key information (EKB) corresponding to the encrypted content to be stored on the information recording medium is impossible, and manufacturing of a disc which stores an improperly acquired content is prevented, thereby enabling application as a control system and method in manufacturing processing of information recording media which record content as digital data such as a disc apparatus which performs data recording processing based on CDs, DVDs, MDs, or blue lasers. Individual processing processes can be applied in an information processing apparatus of each entity involved in manufacturing and control of a content storing information recording medium such as a content providing entity, a manufacturing entity of information recording media, and providing entity of key information.

## Claims

1. An information recording medium manufacturing control system comprising:
content rights owning entity having copyrights or distribution rights over a content;
information recording medium manufacturing entity receiving an information recording medium manufacturing request from said content rights owning entity to perform manufacturing processing of an information recording medium storing encrypted content; and
key information issue entity providing said information recording medium manufacturing entity with a key information block capable of acquiring key information for decryption of said encrypted content in response to a key information issue request from said information recording medium manufacturing entity; wherein
said key information issue entity verifies whether the key information issue request from said information recording medium manufacturing entity comprises authorized request data corresponding to an information recording medium manufacturing request from said content rights owning entity, and, on condition that said authorized request data is verified, provides said key information block for said information recording medium manufacturing entity; and
said information recording medium manufacturing entity comprises a configuration capable of manufacturing an information recording medium storing encrypted content made by encrypting a received content from said content rights owning entity and said key information block received from said key information issue entity.

2. The information recording medium manufacturing control system according to claim 1, wherein said key information block comprises a key information block storing key information acquirable only with decryption processing based on a key stored in a user device having authorized content use rights, and the key information acquirable from the key information block comprises key information required in decryption processing of the encrypted content stored on said information recording medium.

3. The information recording medium manufacturing control system according to claim 2, wherein said key information block comprises an EKB (Enabling Key Block) capable of acquiring key information only with decryption processing which applies a stored key of a user device selected from a plurality of user devices set as leaves in a tree configuration.

4. The information recording medium manufacturing control system according to claim 1, 2 or 3 wherein said key information issue entity performs verification of whether or not said key information issue request comprises authorized requested data corresponding to an information recording medium manufacturing request based on signature verification processing of said content rights owning entity included in a key information issue request from said information recording medium manufacturing entity.

5. The information recording medium manufacturing control system according to any one of the preceding claims, further comprising a configuration in which, in data transmission and reception performed among said content rights owning entity, said information recording medium manufacturing entity and said key information issue entity, mutual authorization processing is performed, data communication is performed on condition that the authorization is satisfied, and encryption processing is performed for transmission data.

6. The information recording medium manufacturing control system according to any one of the preceding claims, further comprising a configuration in which information transmission processing between said content rights owning entity and said information recording medium manufacturing entity is performed as processing through a recording medium.

7. The information recording medium manufacturing control system according to any one of the preceding claims, wherein:
said content rights owning entity, said information recording medium manufacturing entity, and said key information issue entity have a public key, corresponding to a public key certificate issued at a certificate authority, and a secret key; and
communication between said entities is performed by mutual authorization under a public key encryption method.

8. The information recording medium manufacturing control system according to any one of the preceding claims, wherein said information recording medium manufacturing request and said key information issue request include identification information of said content rights owning entity and said information recording medium manufacturing entity.

9. The information recording medium manufacturing control system according to any one of the preceding claims, wherein:
said key information issue request includes a public key certificate of said content rights owning entity; and said key information issue entity verifies a revoke status as an invalidation status of the public key certificate of said content rights owning entity, and, on condition that it is verified that it is not revoked, performs processing of providing said key information block for said information recording medium manufacturing entity.

10. The information recording medium manufacturing control system according to any one of the preceding claims, wherein said key information issue request includes content to be stored on an information recording medium or a hash value corresponding to the content.

11. The information recording medium manufacturing control system according to any one of the preceding claims, wherein said information recording medium manufacturing entity performs information recording medium manufacturing processing which applies an information recording medium manufacturing apparatus performing manufactured number recording processing.

12. The information recording medium manufacturing control system according to any one of the preceding claims, wherein said information recording medium manufacturing entity has a data writing machine licensed from a control entity of the information recording medium manufacturing control system; and, on condition that writing permission information is received from said control entity, performs data writing processing on the information recording medium using said data writing machine.

13. An information processing apparatus for performing processing of creating information recording medium manufacturing request data provided with digital signature related to data including: content; identification data for each of a content rights owning entity and an information recording media manufacturing entity; and information recording medium manufactured number data.

14. An information processing apparatus comprising a creating mechanism for creating key information issue request data corresponding to information recording medium manufacturing request data received from a content rights owning entity, wherein said key information issue request data includes:
at least content or a hash value based on the content;
identification data for each of the content rights owning entity and an information recording medium manufacturing entity;
information recording medium manufactured number data; and
digital signature of the content rights owning entity of each of said data.

15. An information processing apparatus for providing an information recording medium manufacturing entity with a key information block capable of acquiring key information applied to decryption of an encrypted content stored on an information recording medium in response to a key information issue request from said information recording medium manufacturing entity, said apparatus comprising:
verification mechanism of processing a signature of a content rights owning entity included in said key information issue request; and
transmission mechanism of transmitting said key information block to the information recording medium manufacturing entity based on verification of signature by said verification mechanism, on condition that it is verified that said key information issue request is an authorized key information issue request data corresponding to an information recording medium manufacturing request issued by said content rights owning entity.

16. An information recording medium manufacturing control method, comprising the steps of:
transmitting an information recording medium manufacturing request from a content rights owning entity having copyrights or distribution rights over a content to an information recording medium manufacturing entity performing processing of manufacturing an information recording medium storing encrypted content;
transmitting a key information issue request from said information recording medium manufacturing entity to a key information issue entity;
verifying with said key information issue entity whether or not said key information issue request is authorized request data corresponding to an information recording medium manufacturing request from said content rights owning entity;
providing a key information block capable of acquiring key information applied to decryption of said encrypted content from said key information issue entity to said information recording medium manufacturing entity on condition that it is verified that said key information issue request is authorized request data corresponding to said information recording medium manufacturing request as a result of the verification processing in said verification step; and
manufacturing an information recording medium storing an encrypted content by encrypting a content received from said content rights owning entity, and said key information block received from said key information issue entity.

17. The information recording medium manufacturing control method according to claim 16, wherein said key information block includes a key information block storing key information acquirable only with decryption processing based on a key stored in a user device having authorized content use rights, and the key information acquirable from the key information block comprises key information required in decryption processing of the encrypted content stored on said information recording medium.

18. The information recording medium manufacturing control method according to claim 17, wherein said key information block comprises an EKB (Enabling Key Block) capable of acquiring key information only with decryption processing which applies a stored key of a user device selected from a plurality of user devices set as leaves in a tree configuration.

19. The information recording medium manufacturing control method according to claim 16, 17 or 18, wherein said verification step includes a step of performing verification of whether or not said key information issue request comprises authorized requested data corresponding to an information recording medium manufacturing request based on signature verification processing of said content rights owning entity included in a key information issue request from said information recording medium manufacturing entity.

20. The information recording medium manufacturing control method according to any one of claims 16 to 19, wherein data communication performed among said content rights owning entity, said information recording medium manufacturing entity, and said key information issue entity is performed as data communication processing on condition that authorization of mutual authorization processing is satisfied, and further includes encryption processing of transmission data.

21. The information recording medium manufacturing control method according to any one of claims 16 to 20, wherein information transmission processing between said content rights owning entity and said information recording medium manufacturing entity is performed as processing through a recording medium.

22. The information recording medium manufacturing control method according to any one of claims 16 to 21, wherein:
said content rights owning entity, said information recording medium manufacturing entity, and said key information issue entity have a public key, corresponding to a public key certificate issued by a certificate authority, and a secret key; and
communication between said entities is performed by mutual authorization under a public key encryption method.

23. The information recording medium manufacturing control method according to any one of claims 16 to 22, wherein said information recording medium manufacturing request and said key information issue request include identification information of said content rights owning entity and said information recording medium manufacturing entity.

24. The information recording medium manufacturing control method according to any one of claims 16 to 23, wherein:
said key information issue request includes a public key certificate of said content rights owning entity; and
said key information issue entity verifies a revoke status as an invalidation status of the public key certificate of said content rights owning entity, and, on condition that it is verified that it is not revoked, performs processing of providing said key information block for said information recording medium manufacturing entity.

25. The information recording medium manufacturing control method according to any one of claims 16 to 24, wherein said key information issue request includes content to be stored on an information recording medium or a hash value corresponding to the content.

26. The information recording medium manufacturing control method according to any one of claims 16 to 25, wherein said information recording medium manufacturing step performs information recording medium manufacturing processing which applies an information recording medium manufacturing apparatus performing manufactured number recording processing.

27. The information recording medium manufacturing control method according to any one of claims 16 to 26, wherein said information recording medium manufacturing entity has a data writing machine licensed from a control entity of the information recording medium manufacturing control system; and
on condition that writing permission information is received from said control entity, said information recording medium manufacturing step performs data writing processing on the information recording medium using said data writing machine.

28. An information processing method for performing processing of creating information recording medium manufacturing request data provided with digital signature related to data including: content; identification data for each of a content rights owning entity and an information recording media manufacturing entity; and information recording medium manufactured number data.

29. An information processing method for creating key information issue request data corresponding to information recording medium manufacturing request data received from a content rights owning entity, wherein said key information issue request data includes:
at least content or a hash value based on the content;
identification data for each of the content rights owning entity and an information recording medium manufacturing entity;
information recording medium manufactured number data; and
digital signature of the content rights owning entity of each of said data.

30. An information processing method for providing an information recording medium manufacturing entity with a key information block capable of acquiring key information applied to decryption of an encrypted content stored on an information recording medium in response to a key information issue request from said information recording medium manufacturing entity, said method comprising:
processing a signature of a content rights owning entity included in said key information issue request; and
transmitting said key information block to the information recording medium manufacturing entity based on verification of signature by said verification mechanism, on condition that it is verified that said key information issue request is an authorized key information issue request data corresponding to an information recording medium manufacturing request issued by said content rights owning entity.

31. A computer-readable program for causing a computer to execute an information processing method according to any one of claims 28 to 30.
